# EUROPÄISCHE PATENTSCHRIFT

(11) **EP 0 401 467 B1**
(45) Veröffentlichungstag und Bekanntmachung des Hinweises auf die Patenterteilung: **30.08.1995**
(21) Anmeldenummer: 90103542.8
(22) Anmeldetag: 23.02.1990
(51) Int. Cl.: G01B 7/00, G01B 21/04, G06K 11/06

(54) **Positionsmesseinrichtung**
Position measuring device
Dispositif de mesure de position

(30) Priorität: 29.05.1989 CH 2005/89
(43) Veröffentlichungstag der Anmeldung: 12.12.1990
(73) Patentinhaber: KONTRON ELEKTRONIK GMBH, D-85386 Eching (DE); MÜLLER, Udo, D-80995 München (DE)
(72) Erfinder: Müller, Udo, D-8000 München 50 (DE)
(74) Vertreter: Dirscherl, Josef

(56) Entgegenhaltungen:
- DE-A- 3 436 662
- US-A- 4 806 708
- US-A- 4 810 838
- PATENT ABSTRACTS OF JAPAN Band 9, Nr. 120 (P-358)(1843), 24. Mai 1985; & JP-A-607304 (NIPPON GENSHIRYOKU JIGYO K.K.) 16.01.1985

## Beschreibung

Die Erfindung betrifft eine Positionsmeßeinrichtung mit einem Tablett, das mit parallelen Leitern für eine X- und für eine Y-Koordinate versehen ist, und mit einem Läufer oder Stift, der eine elektromagnetische Induktionsspule für den Empfang oder das Aussenden magnetischer Impulse enthält, wobei Leitungsschalter zum Adressieren der Leiter vorgesehen sind und die Zahl der Leitungsschalter kleiner ist als die Zahl der Leiter und somit jeder Leitungsschalter gleichzeitig mehrere Leiter in mehreren Leitergruppen ansteuert.

Durch die US-A-4 806 708 ist eine Positionsmeßeinrichtung ähnlich der eingangs beschriebenen Art bekannt, bei der jede Leiterschleife mit einem Schalter versehen ist.

Durch die DD-A-22 75 04 ist weiter eine solche Positionsmeßeinrichtung bekannt, bei der die Zahl der Leitungsansteuerschalter wenigstens gleich der Zahl der Tablettleiter ist.

Durch die EP-A-0 199 910 ist eine Positionsmeßeinrichtung bekannt, bei der zwar Leiteradressen fehlen, die Leiter jedoch nicht zu Leiterschleifen geschlossen sind und dementsprechend zwingend ein elektrostatisches Verfahren mit entsprechend anders gearteter Kopplung zwischen Tablett und Läufer vorliegt. Beide sind mit dem elektromagnetischen Verfahren nach der Erfindung nicht vergleichbar.

Positionsmeßeinrichtungen oder Digitalisierer, die auf dem elektromagnetischen Induktionsprinzip, d. h. der induktiven Kopplung zwischen Tablett oder Unterlage und dem Meßaufnehmer (Cursor, Läufer, Stift) beruhen, sind in vielfältigen Formen bekannt. Es sind Digitalisierer bekannt, in denen jeder der parallelen Leiter einzeln angesteuert wird und demzufolge für jeden Leiter ein Leitungsschalter vorhanden ist (siehe DE-A1-34 36 662).

Alternativ gibt es Formen, bei denen die Anzahl der Leitungsschalter geringer ist als die Zahl der Leiter. Bei den letzteren stellt sich Zwangsläufig das Problem, daß nach einem Abheben und Wiederaufsetzen des Läufers oder Stifts zunächst immer eine grobe Bestimmung der Position desselben erfolgen muß. Mit anderen Worten ist bei gleichzeitiger Ansteuerung mehrerer Leiter, die auf diese Weise gruppiert sind, eine Absolutpositionsbestimmung erforderlich (siehe US-A-3 819 857). Bei der Positionsmeßeinrichtung nach der US-A-3 819 857 sind zwei ineinander geschachtelte Leitergruppen, nämlich kammförmige und rechteckige, vorgesehen, die sich nicht wiederholen. Eine gleiche Abfolge von Leiteradressen ist damit von sich aus ausgeschlossen.

Auf der anderen Seite haben diese Formen den Vorteil, daß eine erhebliche Einsparung an Leitungsschaltern möglich ist. Bisher konnte diese Einsparung aber den Mehraufwand für komplizierte Maßnahmen zur Absolutpositionsbestimmung nicht aufwiegen. Es besteht also nach wie vor das Bedürfnis nach einer vereinfachten Tablettansteuerung mit einer geringen Zahl von Leitungsschaltern und gleichzeitig einer ohne erheblichen Mehraufwand zu verwirklichenden Absolutpositionsbestimmung.

Die Aufgabe der Erfindung besteht darin, eine derartige vereinfachte Tablettansteuerung bereitzustellen.

Erfindungsgemäß wird dies mit einer Positionsmeßeinrichtung der eingangs beschriebenen Art dadurch gelöst, daß in den derart gebildeten Leitergruppen wenigstens zwei Leiteradressen fehlen, daß die Leiteradressen in den Leitergruppen dadurch bestimmt sind, daß von jeweils derselben Abfolge die wenigstens zwei Leiteradressen weggelassen sind, und daß die Kombination der fehlenden Leiteradressen in jeder Leitergruppe verschieden ist.

Zweckmäßig sind in benachbarten Leitergruppenpaaren ein Teil der fehlenden Leiteradressen gleiche Leiteradressen.

Vorteilhaft fehlen in jeder Leitergruppe wenigstens zwei Leiteradressen.

Gemäß einer vorteilhaften Weiterbildung der Erfindung sind Mittel vorgesehen, die eine von Leiter zu Leiter wechselnde Stromrichtung bewirken.

Die durch fehlende Leiteradressen gebildeten Fehlstellen sind vorteilhaft in systematischer Abfolge nach einer einfachen Vorschrift angeordnet.

In bevorzugten Ausführungsformen ist die einfache Vorschrift eine zyklische Verschiebung.

Im folgenden werden Ausführungsbeispiele der Erfindung beschrieben.

Physikalisch bedingt treten bei der Kombination von Läufer und Tablett Nullstellen auf. An diesen Nullstellen besteht keine elektromagnetische Kopplung zwischen einem oder mehreren Tablettleitern und dem Läufer. Diese Stellen dürfen die Funktion des Geräts nicht beeinträchtigen.

Ausserdem treten bekanntlich physikalisch bedingt, beim Kippen des Stifts grosse Aenderungen im Empfangssignal auf. Diese Aenderungen betreffen die Lage der Nullstellen und die magnetische Verbindung von einzelnen Tablettleitern mit dem Stift. Dieser Effekt muss berücksichtigt werden.

Bei einem ersten Ausführungsbeispiel wurde eine mäanderförmige Leiteranordnung gewählt, bei der die induzierte Spannung mit jedem Auftauchen der Tablettleiter eines Leitungsschalters wechselt. Damit ist die Summe des empfangenen Felds von weiter entfernt liegenden Tablettleitern sehr klein und damit wenig störend.

Die Zuordnung der Tablettleiter zu den Leitungsschaltern ist immer in derselben Abfolge. Dies bedeutet zum Beispiel, dass Tablettleiter, die auf einer Seite des Messaufnehmers liegen, immer kleinere Adressen, Tablettleiter, die auf der gegenüberliegenden Seite liegen immer grössere Adressen als die der Position des Messaufnehmers entsprechende Adresse aufweisen. Da nur eine begrenzte Zahl von Adressen vorliegt, schliesst sich an die höchste Adresse die niedrigste an, so dass sich wie bei einer Uhr eine aufsteigende Reihenfolge ergibt, die sich zyklisch wiederholt.

Um entscheiden zu können, in welchem Bereich sich der Messaufnehmer befindet, werden Leiteradressen übersprungen. Das bedeutet beispielsweise, dass an den Stellen, wo nach einer Leiteradresse 4 eine Leiteradresse 5 folgen sollte, die Leiteradresse 8 plaziert ist.

Um zu vermeiden, dass eine solche übersprungene und damit weggelassene Leiteradresse zufällig an einer Nullstelle liegt, werden mehr als eine Leiteradresse weglassen, im Minimalfall also zwei Leiteradressen, die so liegen, dass sie nicht gleichzeitig an einer Nullstelle sein können. Das dann noch verbleibende Problem, dass eine Leiteradresse, die weggelassen wurde, aus der nächsten Leitergruppe einen Einfluss auf das Signal hat, wurde dadurch umgangen, dass jede weggelassene Leiteradresse immer in mindestens zwei Gruppen, der besseren Auswertbarkeit wegen in drei Gruppen weggelassen wird.

Die übersprungenen oder weggelassenen Tablettleiteradressen sind in systematischer Folge angeordnet. Nach 5 vorhandenen Leiteradressen, folgen zwei nicht vorhandene. Nach weiteren 5 vorhandenen Leiteradressen folgen drei nicht vorhandene. Daraufhin wiederholt sich der Zyklus systematisch. Durch diese Systematik ergibt sich, dass die Anzahl der fehlenden Adressen nicht in allen Leitergruppen gleich ist.

Nach einer bevorzugten Ausführungsfrom eines sendenden Tabletts sind die Tablettleiter so mit den Leitungsschaltern verbunden, dass die Stromrichtung von Leiter zu Leiter wechselt. Damit bewirkt jeder Leiter gegenüber dem vorhergehenden eine um 180 Grad gedrehte Ausgangssignalphase im Läufer.

Als Ergebnis erreicht man folgende Anordnung mit 16 Leitungsschaltern und 160 Tablettleitern:

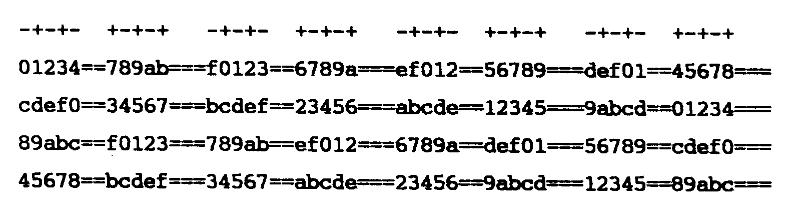

In dieser Darstellung steht das Zeichen "=" für weggelassene Adressen. Auf dem Tablett befindet sich physikalisch folgende Anordnung: 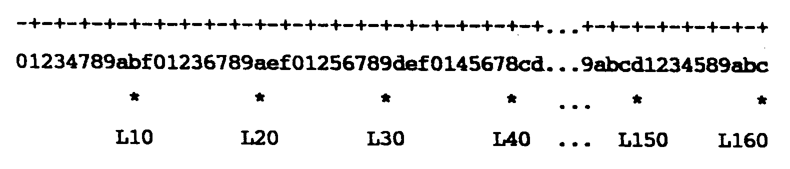
dabei ist
**-/+** = Phase
**0...f** = Leitungsschalter
**L10...** = durchnummerierte Tablettleiter.

Bei der Ansteuerung kann entweder der Läufer, oder das Tablett der Magnetfeldsender sein.

Wird dieses Verfahren bei einem aktiv sendenden Tablett verwendet, so wird bei diesem Ausführungsbeispiel nur noch von einem Leiter zum nächsten umgeschaltet, ohne den Strom pro Leiter einmal ein- und auszuschalten. Dies bewirkt, dass im Empfangssignal von Leiter zu Leiter jeweils ein Phasenwechsel stattfindet und gleichphasig ansteuernde Leitungsschalter Verwendung finden können.

Nach der Ermittlung der Leitergruppe, in der sich der Läufer befindet, wird das Tablett so adressiert, dass sich eine ununterbrochene Leiteransteuerung ergibt.

Im Eingangskreis wird ein Bandpassfilter verwendet mit einer Resonanzfrequenz die der halben Leitungsweiterschaltfrequenz entspricht. Somit ergibt sich ein moduliertes Signal mit nur noch einem Phasensprung.

Das Ueberspringen oder Auslassen von Leiteradressen führt im Empfangssignal zu fehlenden Amplituden. Dieses Fehlen eines Empfangssignals setzt die Elektronik in die Lage den Ort zu identifizieren, an dem der Läufer sich befindet.

Da die Tablettleiter in streng monotoner Folge angeordnet sind, kann festgestellt werden, in welche Richtung der Stift gekippt ist. Da bekannt ist, wie sich die Empfangseigenschaften beim gekippten Stift ändern, kann die Leitergruppe in Abhängigkeit von der Kipprichtung und dem Neigungswinkel gesucht werden.

Zuerst werden alle Leiter ein oder mehrfach gepulst. Die im Läufer induzierten Signale zeigen nun an, in welcher Gruppe von Leitern sich der Läufer befindet. Daraufhin wird die Ansteuerung entsprechend so geschaltet, dass sich eine Leiteransteuerung ohne fehlende Leiteradressen ergibt. Dies führt dann zu einem Empfangssignal, mit dem eine ähnliche Signalverarbeitung durchgeführt werden kann, wie wenn das Tablett konventionell aufgebaut wäre und jeder Tablettleiter mit einem eigenen Tablettleitungsschalter verbunden wäre.

Damit sind dann auch alle bisher bekannten vorteilhaften Verfahren zur Koordinatengewinnung, wie Differentiation und Filterung des Eingangssignals möglich.

Als weiteres Ausführungsbeispiel wurde ein kleineres Tablett wie folgt realisiert.

Die einzelnen Tablettleiter sind in bekannter Weise als Spule ausgebildet. Dies hat den Vorteil, dass in der Nähe der Tablettleiter ein starkes lokales Feld entsteht, und weiter entfernt liegende Tablettleiter einen geringen Feldeinfluss besitzten. Die Leiterschleifen führen ausserdem zu einer einfachen Differentiation des Empfangssignals.

Die Zuordnung der Tablettleiter zu den Leitungsschaltern ist wiederum immer in derselben Abfolge, zum Beispiel also dass Tablettleiter, die auf einer Seite des Messaufnehmers liegen immer kleinere Adressen, Tablettleiter, die auf der gegenüberliegenden Seite liegen, immer grössere Adressen als die Adresse des Messaufnehmers aufweisen.

Die übersprungenen oder weggelassenen Tablettleiteradressen befinden sich wiederum in systematischer Folge. Nach zwei vorhandenen, folgt eine nicht vorhandene Leiteradresse. Nach weiteren zwei vorhandenen folgen drei nicht vorhandene Adressen. Daraufhin wiederholt sich der Zyklus systematisch.

Als Ergebnis erreicht man folgende Anordnung mit 15 Leitungsschalterleitungen und 60 Tablettleitern:

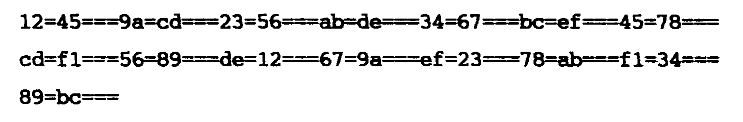

In diesem Beispiel steht jedes Zeichen "=" für eine Leiteradresse, die nicht vorhanden ist, und jede Zahl zeigt den zu der vorhandenen Leiteradresse zugehörigen Leitungsschalter.

Auf dem Tablett ist dann physikalisch folgende Anordnung: 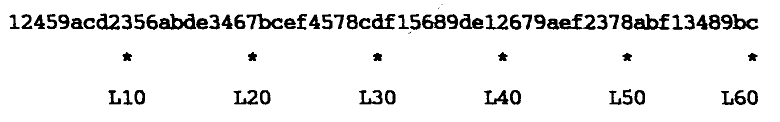
dabei sind mit **1...f** = Leitungsschalter
und mit **L10... L60** = Tablettleiter bezeichnet.
Allgemein kann aber entweder der Läufer, oder das Tablett der Magnetfeldsender sein. Pro Tablettleiter kann ein Einfach- oder ein Mehrfachpuls Verwendung finden.

In diesem Ausführungsbeispiel ist das Tablett der Sender, der pro Tablettleiter einen Doppelpuls emittiert.

Nach der Ermittlung der Leitergruppe, in der sich der Läufer befindet, wird das Tablett so adressiert, dass sich eine Leitungsansteuerung ohne fehlende Leiteradressen ergibt. Dies führt dann innerhalb eines Fensters zu einem Signal, mit dem eine ähnliche Signalverarbeitung durchgeführt werden kann, wie wenn das Tablett konventionell aufgebaut wäre und jeder Tablettleiter mit einem eigenen Tablettleitungsschalter verbunden wäre.

Es lassen sich noch mehr Konstellationen finden, die den oben genannten Anforderungen entsprechen. Dies hängt ab von der Anzahl der Leitungsschalterelemente und von der Reichweite der Kombination von Sender und Empfänger.

## Patentansprüche

1. Positionsmeßeinrichtung mit einem Tablett, das mit parallelen Leitern für eine X- und für eine Y-Koordinate versehen ist, und mit einem Läufer oder Stift, der eine elektromagnetische Induktionsspule für den Empfang oder das Aussenden magnetischer Impulse enthält, wobei Leitungsschalter zum Adressieren der Leiter vorgesehen sind und die Zahl der Leitungsschalter kleiner ist als die Zahl der Leiter und somit jeder Leitungsschalter gleichzeitig mehrere Leiter in mehreren Leitergruppen ansteuert,
dadurch gekennzeichnet, daß in den derart gebildeten Leitergruppen wenigstens zwei Leiteradressen fehlen, daß die Leiteradressen in den Leitergruppen dadurch bestimmt sind, daß von jeweils derselben Abfolge die wenigstens zwei Leiteradressen weggelassen sind, und daß die Kombination der fehlenden Leiteradressen in jeder Leitergruppe verschieden ist.

2. Positionsmeßeinrichtung nach Anspruch 1,
dadurch gekennzeichnet, daß in benachbarten Leitergruppenpaaren ein Teil der fehlenden Leiteradressen gleiche Adressen sind.

3. Positionsmeßeinrichtung nach Anspruch 1 oder 2,
dadurch gekennzeichnet, daß in jeder Leitergruppe wenigstens zwei Leiteradressen fehlen.

4. Positionsmeßeinrichtung nach einem der Ansprüche 1 bis 3,
dadurch gekennzeichnet, daß Mittel vorgesehen sind, die eine von Leiter zu Leiter wechselnde Stromrichtung bewirken.

5. Positionsmeßeinrichtung nach einem der Ansprüche 1 bis 4,
dadurch gekennzeichnet, daß die durch fehlende Leiteradressen gebildeten Fehlstellen in systematischer Abfolge nach einer einfachen Vorschrift angeordnet sind.

6. Positionsmeßeinrichtung nach Anspruch 5,
dadurch gekennzeichnet, daß die einfache Vorschrift eine zyklische Verschiebung ist.

## Claims

1. Position measuring device with a tablet which is provided with parallel wires for X and Y coordinates, and with a cursor or pin which contains an electromagnetic induction coil for receiving or transmitting magnetic pulses, wherein line switches are provided for addressing the wires and the number of line switches is smaller than the number of wires and therefore each line switch simultaneously controls several wires in several groups of wires, characterised in that
- in the groups of wires formed in this way, at least two wire addresses are absent,
- the wire addresses in the groups of wires are determined by the fact that from in each case the same sequence, the at least two wire addresses are omitted,
- and the combination of absent wire addresses is different in each group of wires.

2. Position measuring device according to claim 1, characterised in that in adjacent pairs of groups of wires, some of the absent wire addresses are the same addresses.

3. Position measuring device according to claim 1 or 2, characterised in that at least two wire addresses are absent in each group of wires.

4. Position measuring device according to any of claims 1 to 3, characterised in that means are provided which cause a current direction alternating from one wire to the next.

5. Position measuring device according to any of claims 1 to 4, characterised in that the voids formed by absent wire addresses are advantageously arranged in a systematic sequence according to a simple specification.

6. Position measuring device according to claim 5, characterised in that the simple specification is a cyclic shift.

## Revendications

1. Dispositif de mesure de position avec un plateau pourvu de conducteurs parallèles pour les coordonnées en X et les coordonnées en Y, et pourvu d'un curseur ou tige, contenant une bobine d'induction électromagnétique destinée à la réception ou à l'émission d'impulsions magnétiques,des commutateurs de conducteurs destinés à l'adressage des conducteurs étant prévus et le nombre des commutateurs de conducteurs étant inférieur au nombre des conducteurs, et ainsi chaque commutateur de conducteurs commandant simultanément plusieurs conducteurs dans plusieurs groupes de conducteurs, caractérisé en ce qu'
- il manque dans les groupes de conducteurs formés de cette façon au moins deux adresses de conducteurs,
- en ce que les adresses de conducteurs situées dans les groupes de conducteurs sont déterminées par le fait qu'à partir de chaque fois le même ordre de succession, les au moins deux adresses de conducteurs sont supprimées,
- et en ce que la combinaison des adresses de conducteurs manquante est différente dans chaque groupe de conducteurs

2. Dispositif de mesure de position selon la revendication 1, caractérisé en ce que, dans des couples de groupes conducteurs voisins, une partie des adresses de conducteurs manquantes sont des adresses identiques.

3. Dispositif de mesure de position selon la revendication 1 ou 2, caractérisé en ce que dans chaque groupe de conducteurs manquent au moins deux adresses de conducteurs.

4. Dispositif de mesure de position selon l'une des revendications 1 à 3, caractérisé en ce que sont prévus des moyens provoquant une alternance du sens du courant d'un conducteur à l'autre.

5. Dispositif de mesure de position selon l'une des revendications 1 à 4, caractérisé en ce que les emplacements vides formés par les adresses de conducteurs manquantes sont disposés suivant un ordre de succession systématique, suivant une prescription simple.

6. Dispositif de mesure de position selon la revendication 5, caractérisé en ce que la prescription simple est un déplacement cyclique.
